## Europäisches Patentamt
## European Patent Office
## Office européen des brevets

(19)

(11) Publication number: **0 101 233**
A1

(12)

# EUROPEAN PATENT APPLICATION

(21) Application number: 83304413.4

(22) Date of filing: 29.07.83

(51) Int. Cl.³: **B 62 H 1/02**

(30) Priority: 06.08.82 ZA 825721

(43) Date of publication of application:
22.02.84 Bulletin 84/8

(84) Designated Contracting States:
AT BE CH DE FR GB IT LI LU NL SE

(71) Applicant: Bellingham, Johannes Jacobus
4, Begonia Place
Pomona Kempton Park(ZA)

(71) Applicant: Hobbs, Johan Guy
5, Caister Road
Mulbarton Transvaal Province(ZA)

(72) Inventor: Bellingham, Johannes Jacobus
4, Begonia Place
Pomona Kempton Park(ZA)

(72) Inventor: Hobbs, Johan Guy
5, Caister Road
Mulbarton Transvaal Province(ZA)

(74) Representative: Smith, Martin Stanley et al,
Stevens, Hewlett & Perkins 5, Quality Court Chancery
Lane
London WC2A 1HZ(GB)

(54) A stand for a motor cycle.

(57) Load support means (10) displaceable by a piston/
cylinder (24) mechanism between an inoperative position
and an operative position in which a motorcycle, onto which
the stand is mounted, can be supported in an upright
configuration. Preferably the piston/cylinder (24) mechanism
is hydraulically operable utilising the engine oil pressure of
the motorcycle being connected into line with the engine oil
line thereof.

FIG. I

## " A STAND FOR A MOTOR CYCLE"

THIS INVENTION relates to a stand for a motorcycle.

According to the invention there is provided a stand for a motorcycle, which includes

a load support means displaceable between an inoperative position and an operative position in which, when suitably mounted on a motorcycle, it can support the cycle in an upright configuration;

displacement means to displace the load support means between its inoperative and operative positions; and

mounting means for mounting the load support means onto a motorcycle.

The load support means may be a collapsible structure which is displaceable between a collapsed retracted position, defining the inoperative position thereof, and an extended position, defining the operative position thereof.

The displacement means for displacing the load support means between its inoperative and operative positions may be a hydraulically operable mechanism and, in particular, may include a piston/cylinder arrangement operatively connected to the load support means to permit displacement thereof between its operative and inoperative positions.

For a load support means in the form of a collapsible structure, the piston/cylinder arrangement may be suitably connected between structure elements to permit displacement thereof between its retracted and extended positions.

The hydraulically operable mechanism may be operable by means of a suitable pump which may be manually operated to convey hydraulic liquid under pressure to the mechanism or which may be driven by the engine of the motorcycle. A separate liquid reservoir may be provided for this purpose.

Alternatively, the hydraulically operable mechanism may be connected into line with the engine oil line of the motorcycle onto which the stand is mounted. In this configuration, suitable valves may be provided which can be manually or otherwise operated to transmit oil to the mechanism for displacement of the load carrier into its operative position while the engine of the motorcycle is running. A safety means may further be provided, for this configuration, which can prevent operation of the mechanism while the cycle is in motion.

Holding means may further be provided to hold the load support means in its operative position.  The holding means may include means adapted to inhibit operation of the displacement means whereby the load support means is displaced from its operative into its inoperative position.  As such, the holding means may be a non-return valve which prevents the release of hydraulic liquid from the hydraulically operable mechanism until manually operated.  Alternatively, or preferably in addition, a mechanical holding means may be provided to physically hold the load support means in it  operative position.

Urging means may further be provided which may be suitable springs, or the like, which urges the load support means into its inoperative position when the holding means is rendered inoperative.

The mounting means may be a suitable bracket whereby the load support means can be mounted onto a motorcycle in place of its existing stand utilising the mounting means provided on the cycle for its existing stand.  Alternatively, on new motorcycles, the mounting means may be adapted for mounting the load support means onto  means specifically provided therefor on a motor cycle.  The mounting means may be secured to the load support means or form an integral part thereof.

0101233

The stand may further include a base member, secured to the load support means, which is positioned to abut the ground when the load support means is displaced into its operative position and which is adapted to support the cycle in a balanced upright configuration when so abutting the ground.

The invention also extends to a motorcycle including a stand, in accordance with the invention, and to a motorcycle modified to include such a stand.

The applicant anticipates various alternative configurations of a stand, in accordance with the invention, which incorporate the main principals of the invention insofar as they are adapted to support a motorcycle without requiring direct manual power to position the cycle onto its stand. This can clearly be done by merely utilising an arrangement which can be hydraulically, mechanically, electrically, pneumatically, or otherwise operated to displace the stand into a position in which it supports a motorcycle.

One alternative embodiment may combine the load support means and the displacement means into a single unit for supporting a motorcycle.

The invention is now described by way of an example, with reference to the accompanying diagrammatic drawings, in which:

Figure 1 shows a side view of a stand for a motorcycle, in accordance with the invention;  and

Figure 2 shows a partially sectioned side view of a displacement means for the stand of Figure 1.

Referring to the drawings,  a stand for a motorcycle
in accordance with the invention,  is generally indicated by the
reference numeral 10.   The stand 10 includes a collapsible structure 12 comprising two sets of elongate structure members 14, the
members 14 being pivotally secured with respect to one another in
the manner hereinafter described,  the two sets of members being
disposed in a spaced apart configuration substantially parallel
to one another (only one set of members 14 is shown in Figure
1).

The sets of members 14 are each divided in two pairs
14.1 and 14.2 respectively, one end of the members of each pair
being pivotally mounted onto a common axle 16 and 18 respectively
and the free ends of the members of each pair being pivotally
secured to a base member 20 and a mounting bracket 22 respectively.  In the configuration described,  it will be appreciated
that the structure 12 is displaceable between a collapsed configuration in which the angle between the members of each pair 14.1
and 14.2 respectively approaches zero degrees and an extended
configuration in which the angle between the members of each pair
14.1 and 14.2 respectively increases beyond 90 degrees tending
towards 180 degrees,  in which the members will tend towards
being axially aligned with one another.  As such, the spacing
between the base member 20 and mounting bracket 22 varies between a first position in which they are relatively close to one another and a second position in which they are spaced from one another.

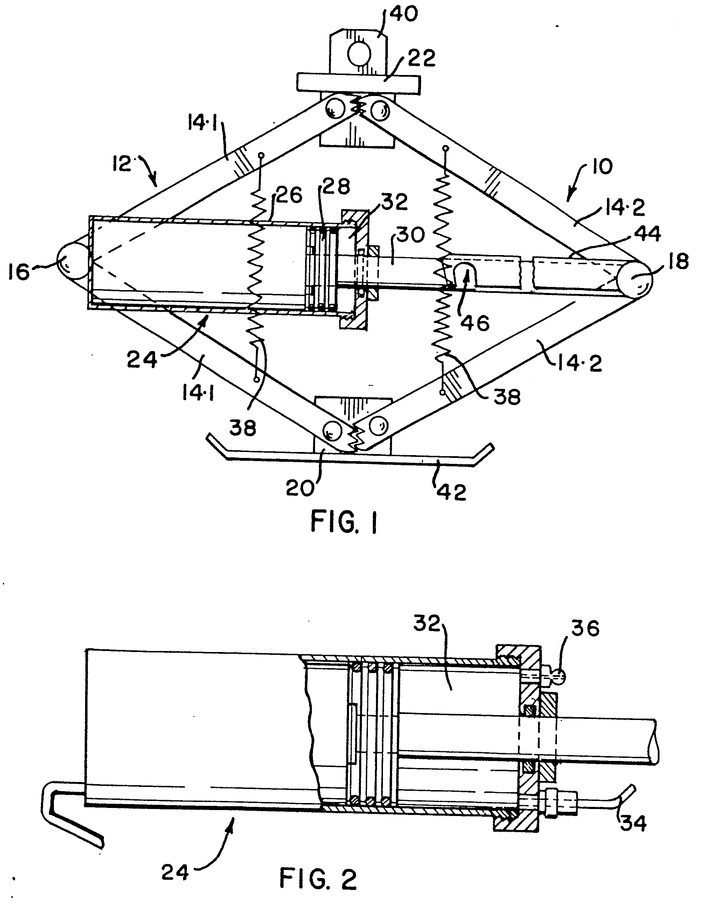

A piston and cylinder mechanism, generally indicated by the reference numeral 24, is operatively connected between the axes 16 and 18. As such, it will be understood that the angular relationship between the pairs of members 14.1 and 14.2 and thus the spacing between the base member 20 and the mounting bracket 22 will be determined by the operative position of the mechanism 24. The mechanism 24 essentially includes a cylinder 26 within which a piston 28 is axially displaceable, a piston rod 30 projecting from the cylinder 26. In the arrangement shown, the cylinder 26 and the piston rod 30 are operatively secured to the axes 16 and 18 respectively as is shown in Figure 1.

The configuration of the piston/cylinder mechanism 24 shown in Figure 1 defines the collapsed configuration of the stand 10 and by charging a hydraulic liquid under pressure into the chamber 32 via a liquid inlet 34 the piston will be displaced towards the closed end of the cylinder 26 thereby urging the axes 16 and 18 towards one another and thus urging the pairs of structure members 14.1 and 14.2 respectively towards their extended configuration in which the spacing between the base member 20 and mounting bracket 22 is increased. When the discharge of hydraulic liquid via the outlet 36 is permitted, springs 38 disposed between the pairs of structure members 14.1 and 14.2 respectively will urge the members towards one another thereby urging the stand 10 towards its collapsed coonfiguration as shown in Figure 1. In the manner abovedescribed, the stand 10 can therefore be displaced between a collapsed configuration as shown in Figure 1 and an extended configuration in which the spacing between the base member 20 and mounting bracket 22 is increased.

The mounting bracket 22 has two bracket members 40 projecting therefrom which is particularly disposed so that the stand 10 can be mounted onto the existing mounting arrangment of a motorcycle (not shown) onto which the conventional stand of a cycle is mounted. The stand 10 can therefore effectively replace the existing stand of a motorcycle. When so mounted and when in its collapsed configuration, the base member 20 will be disposed a safe distance above the ground level along which a cycle can ride. In order to support the cycle in a balanced upright configuration, a hydraulic liquid under pressure can be charged into the chamber 32 defined by the piston and cylinder mechanism 24 thereby increasing the spacing between the mounting bracket 22 and the base member 20, this displacement continuing until the base member 24 can abut the ground and effectively act as a load support which can carry the weight of a cycle and support the cycle in its upright configuration. The base member 20 includes a base plate 42 which is specifically dimensioned and adapted for this purpose.

- 8 -                           0101233

Charging of hydraulic liquid under pressure can be effected in various manners. In accordance with a first configuration, a separate liquid pump may be provided which can be manually operated to pump liquid from a separate liquid reservoir towards the mechanism 24 to thereby effect displacement of the stand 10 into its operative configuration. Alternatively, the pump can be operated via any suitable output from the motorcycle so that liquid can be charged into the chamber 32 while the engine of the cycle is still running but the cycle itself is stationary.

Still further according to a third configuration, the liquid inlet 34 can be operatively connected into the oil line of the motorcycle so that the oil pressure from the cycle can be utilised for charging the chamber with an hydraulic liquid and thus for extending the stand into its operative configuration. For the latter configuration, a first valve may be provided which can be manually opened to permit hydraulic liquid to be charged into the chamber 32 so that the stand can be displaced into its operative configuration for supporting a cycle. A second safety valve may further be provided which can be operatively associated with the drive shaft or chain of the cycle ensuring that as long as the drive shaft or chain rotates, the oil line towards the chamber 32 remains closed and only when the drive shaft or chain becomes stationary this valve is opened to permit oil to be charged towards the chamber 32 when the first valve is manually opened. It will be appreciated that in this way the stand cannot be actuated while a cycle is in motion. It will further be appreciated that the safety valve can be sensitive to any other component or member of a motorcycle which is in motion while the cycle is in motion and which is stationary when the cycle stops. Any other like safety means can also be used for the same purpose.

To hold the stand in its operative configuration, a holding arm 44, pivotally secured to the axis 18 can be hooked via a hook formation 46 onto the axis 16 to thereby fix the spacing between the axes 16 and 18 and thus ensure that the stand remains in its upright configuration for as long as the axis 16 is engaged. The stand can thus not be rendered inoperative unless the holding arm 44 is disengaged from the axis 16 in which case the springs 38 will urge the stand into its inoperative configuration. Alternatively, or in addition, suitable valves may be provided in the oil line leading towards and from the piston and cylinder mechanism 24 which must be manually operated to provide for the discharge of oil from the chamber 32 and thus allow displacement of the piston 28 towards its position in which the stand is in its collapsed configuration.

It will be appreciated from the above description that the stand 10 permits a motorcycle to be supported in its upright configuration without requiring any direct manual power. The applicant believes that such a stand has become very necessary in the light of the size of motorcycles that are presently available and the stands of which cannot easily be rendered effective by the rider of such a cycle without excessive manual force to be applied by him or without assistance.

It will be appreciated that the principals of the invention can be embodied in various configurations essentially utilising power provided by the engine of a motorcycle for displacing the stand into an operative configuration in which a cycle can be supported in an upright configuration.

## CLAIMS

1.      A stand for a motorcycle, which includes

a load support means displaceable between an inoperative position and an operative position in which, when suitably mounted on a motorcycle, can support the cycle in an upright configuration;

displacement means to displace the load support means between its inoperative and operative positions; and

mounting means for mounting the load support means onto a motorcycle.

2.      A stand as claimed in Claim 1, in which the load support means is a collapsible structure which is displaceable between a collapsed retracted position, defining the inoperative position thereof, and an extended position, defining the operative position thereof.

3.      A stand as claimed in Claim 1 or Claim 2, in which the displacement means includes a hydraulically operable mechanism.

4.      A stand as claimed in Claim 3, in which the hydraulically operable mechanism includes a piston/cylinder arrangement operatively connected to the load support means to permit displacement thereof between its operative and inoperative positions.

- 12 -                    0101233

5.      A stand as claimed in Claim 3 or Claim 4, in which the hydraulically operable mechanism includes a pump for the operation thereof.

6.      A stand as claimed in Claim 5, in which the pump is manually operable.

7.      A stand as claimed in Claim 5, in which the pump is adapted to be driven by the engine of a motorcycle with the stand mounted on the motorcycle.

8.      A stand as claimed in Claim 3 or Claim 4, in which the hydraulically operable mechanism defines a flow line connected into line with the engine oil line of a motorcycle, onto which the stand is mounted, so that the pressurised engine oil can be utilised to operate the mechanism.

9.      A stand as claimed in Claim 8, in which the hydraulically operable mechanism includes control valves and safety means to control operation thereof and ensure that operation cannot occur while a cycle, onto which the stand is mounted, is in motion.

10.      A stand as claimed in any one of the preceding claims, which includes holding means for releasably holding the load support means in its operative configuration.

11.      A stand as claimed in Claim 10, in which the holding
means includes means adapted to inhibit operation of the displacement means whereby the load support means is displaced from
its operative position into its inoperative position.

12.      A stand as claimed in Claim 10 or Claim 11, in which
the holding means includes a mechanical means which can physically hold the load support means in its operative position.

13.      A stand as claimed in any one of Claims 10 to 12, in
which the displacement means includes urging means for urging the
load support means into the inoperative position when the holding
means is rendered inoperative.

14.      A stand as claimed in any one of the preceding claims,
in which the mounting means is a bracket adapted to be accommodated by the existing mounting arrangement of a cycle for its
existing conventional stand which is then effectively replaced.

15.      A stand as claimed in any one of Claims 1 to 13, in
which the mounting means is specifically adapted to co-operate
with a mounting arrangement provided on a motorcycle on which
the stand is to be mounted and which is specifically provided
therefor.

16.    A stand as claimed in any one of the preceding claims, in which the mounting means is fixedly secured to the load support means.

17.    A stand as claimed in any one of the preceding claims in which  the load support means includes a base member which, in the operative position of the load support means, abuts the ground to support a cycle, onto which the stand is mounted, in an upright configuration.

18.    A motorcycle including a stand as claimed in any one of claims 1 to 17.

FIG. 1

FIG. 2

**0101233**

Application number

European Patent
Office

**EUROPEAN SEARCH REPORT**

EP 83 30 4413

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 358 127 (KISSICK) <br><br> * Whole document * <br><br> --- | 1-6,9-15 | B 62 H 1/02 |
| A | US-A-4 145 069 (KISSICK) <br><br> ----- | | |

| | TECHNICAL FIELDS SEARCHED (Int. Cl. ³) |
|---|---|
| | B 62 H |

The present search report has been drawn up for all claims

| Place of search | Date of completion of the search | Examiner |
|---|---|---|
| THE HAGUE | 14-11-1983 | GEMMELL R.I.D. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................

& : member of the same patent family, corresponding
    document

EPO Form 1503. 03.82